# EUROPÄISCHE PATENTSCHRIFT

(11) **EP 1 222 146 B1**
(45) Veröffentlichungstag und Bekanntmachung des Hinweises auf die Patenterteilung: **18.08.2004**
(21) Anmeldenummer: 00960492.7
(22) Anmeldetag: 18.08.2000
(51) Int. Cl.: C01F 11/18

(54) **VERFAHREN ZUR KONTINUIERLICHEN HERSTELLUNG VON GEFÄLLTEM CALCIUMCARBONAT**
METHOD FOR THE CONTINUOUS PRODUCTION OF PRECIPITATED CALCIUM CARBONATE
PROCEDE DE PRODUCTION EN CONTINU DE CARBONATE DE CALCIUM PRECIPITE

(30) Priorität: 09.09.1999 DE 19943093
(43) Veröffentlichungstag der Anmeldung: 17.07.2002
(73) Patentinhaber: Solvay Soda Deutschland GmbH, 30173 Hannover (DE)
(72) Erfinder: NOVER, Christoph, 47495 Rheinberg (DE); DILLENBURG, Helmut, 47495 Rheinberg (DE)
(74) Vertreter: Kulik, Angelika
(86) Internationale Anmeldenummer: PCT/EP2000/008092
(87) Internationale Veröffentlichungsnummer: WO 2001/017905

(56) Entgegenhaltungen:
- EP-A- 0 140 644
- EP-A- 0 558 275
- EP-A- 0 799 797
- EP-A- 0 850 880
- WO-A-98/52870

## Beschreibung

Die Erfindung betrifft ein Verfahren zur kontinuierlichen Herstellung von gefälltem Calciumcarbonat.

Gefälltes Calciumcarbonat wird für unterschiedliche Zwecke eingesetzt, z. B. als Füllstoff oder Pigment in der Papier- oder Farbenindustrie, als funktioneller Füllstoff für die Herstellung von Kunststoffen, Plastisolen, Dichtungsmassen, Druckfarben, Kautschuk, Zahnpasten, Kosmetika usw.

Es sind unterschiedliche Verfahren zur Herstellung von gefälltem Calciumcarbonat bekannt, wobei üblicherweise Calciumhydroxid als Ausgangsmaterial eingesetzt wird.

Gemäß DE 196 43 657 wird eine Calciumhydroxidlösung mit Kohlendioxid versetzt und das Reaktionsgemisch durch einen kontinuierlich arbeitenden Mischreaktor, in dem Scher-, Schub- und Reibungskräfte von ineinandergreifenden Werkzeugen mit hoher Relativgeschwindigkeit nach dem Rotor-Stator-Prinzip auf die Reaktionsmischung einwirken. Die Scher-, Schub- und Reibungskräfte im Reaktor bewirken, daß das Kohlendioxid in äußerst fein verteilter Form in die Calciumhydroxidlösung eingetragen wird und ein mikronisiertes Calciumcarbonat gebildet wird.

Gemäß US-PS 2,058,503 wird kolloidales Calciumcarbonat durch Umsetzung einer Calciumhydroxidlösung in einem diskontinuierlichen Verfahren mit Kohlendioxid bei Temperaturen von 15 bis 50 °C erhalten.

Die US-PS 2,964,382 offenbart ein Verfahren zur Herstellung von gefälltem Calciumcarbonat, wobei die Partikelgröße durch die Rührgeschwindigkeit im Reaktor bestimmt wird.

Gemäß EP 0 799 797 erfolgt die kontinuierliche Herstellung von gefälltem Calciumcarbonat in seriell geschalteten Zellen, wobei die Korngröße und die Carbonisierung von der Konzentration der Hydratsuspension, der Durchflußmenge und dem Rauchgasüberschuß beeinflußt werden, ohne daß genauere Angaben über diese Zusammenhänge und Abhängigkeiten offenbart werden.

Aufgabe der vorliegenden Erfindung ist es, ein kontinuierliches Verfahren zur Herstellung von gefälltem Calciumcarbonat mit steuerbaren Teilchendurchmessern von 0,02 bis 5 µm durch Umsetzung einer Calciumhydroxid enthaltenden Suspension (Kalkmilch) mit einem CO₂ enthaltendem Gas, z. B. Kalkofengas, Rauchgas oder sonstige Abgase aus Verbrennungsvorgängen oder CO₂-haltige Restgase aus anderen Prozessen bereitzustellen.

Erfindungsgemäß erfolgt die kontinuierliche Herstellung von gefälltem Calciumcarbonat in mindestens zwei hintereinandergeschalteten separaten Stufen und zwar in einer
1. Stufe, der Keimbildungsphase, in der vorwiegend Keime gebildet werden
   und einer
2. Stufe, der Kristallwachstumsphase, in der vorwiegend die gebildeten Keime der 1. Stufe wachsen.

Erfindungsgemäß läuft die Keimbildungsphase in einem separaten Reaktor ab.

In einer Ausführungsform der Erfindung wird die Kalkmilch und CO₂ gleichzeitig in den Reaktor eingeleitet, wobei die eingeleitete CO₂-Menge in Beziehung zum Calciumhydroxidvolumen steht. Nach erfolgter Keimbildung wird die Suspension in mindestens einen nachgeschalteten Reaktor eingeleitet, wo in Gegenwart von CO₂ die Calciumcarbonatkristalle wachsen.

Es ist ebenfalls im Sinne der Erfindung, das Reaktionsprodukt nach der Keimbildung zunächst zwischenzulagern und die Kristallwachstumsphase zeitversetzt bzw. an anderen Standorten durchzuführen.

Das CO₂ enthaltende Gas wird in alle Stufen separat eingeleitet, wobei eine gute Verteilung des CO₂ durch an sich bekannte Methoden gewährleistet wird. Jede Reaktionsstufe wird separat, je nach gewünschter Produktqualität und gegebene Rohstoffqualität auf die jeweilige Anforderung bezüglich der nachfolgenden Verwendung des Calciumcarbonates eingestellt.

Als Reaktionsbehälter können gleiche oder vollkommen unterschiedliche Reaktoren in den einzelnen Stufen eingesetzt werden. Zur Herstellung sehr feiner Partikel bietet sich ein sehr kleiner, jedoch intensiv durchmischter Reaktor für Stufe 1 und ein wesentlich größerer, mäßig durchmischter Reaktor für Stufe 2 an. Für die Herstellung sehr großer Partikel können auch zwei gleich große gerührte Reaktoren eingesetzt werden.

Es wurde gefunden, daß die Teilchengröße der Calciumcarbonatpartikel in Abhängigkeit von der Konzentration des gebildeten Calciumcarbonats im ersten Reaktor, also in der Keimbildungsphase gesteuert werden kann, wobei die Verweilzeit und die eingeleitete CO₂-Menge, bezogen auf die Calciumhydroxidsuspensionsmenge wesentlich sind.

Erfindungsgemäß wurde eine Calciumhydroxidsuspension mit einer Konzentration bis zu 250 g/l eingesetzt. Der mittlere Teilchendurchmesser der Calciumhydroxidpartikel beträgt 1 bis 10 µm, vorzugsweise 1,2 bis 5 µm.

Die Kalkmilch durchfließt den Reaktor 1 mit einer Verweilzeit von 0,1 sec. bis 3 Stunden.

Die in die erste Stufe eingeleitete CO₂-Menge beträgt 1 bis 60 Mol.-%, vorzugsweise 5 bis 50 Mol.-%, bezogen auf das Calciumhydroxid.

Die Kristallwachstumsphase wird in einem oder seriell geschalteten Reaktoren durchgeführt, wobei die Verweildauer 0,25 bis 10 Stunden, vorzugsweise 1 bis 3 Stunden betragen kann, bei einer CO₂ enthaltenden Gasdurchflußmenge von mindestens 40 bis 99 Mol.-%, vorzugsweise 50 bis 95 Mol.-%, bezogen auf das Calciumhydroxid.

Im allgemeinen wird in Stufe 2 ein Überschuß an CO₂ eingeleitet, um einen vollständigen Umsatz zu gewährleisten.

In der ersten Stufe wird die Umsetzung des Calciumhydroxids mit CO₂ so gesteuert, daß vorzugsweise Calciumcarbonatkeime gebildet werden. Durch Variation der Volumenströme des Calciumhydroxids und des eingeleiteten CO₂ zueinander, wurden Bedingungen erzeugt, welche die Keimbildung gegenüber dem Kristallwachstum begünstigen.

Die Konzentration an gebildetem Calciumcarbonat bei sonst gleichen Reaktionsbedingungen wie Calciumhydroxid und CO₂-Konzentration, Temperatur, Druck, Rührbedingungen in Stufe 1 des Verfahrens legt somit die Teilchengröße des Endproduktes fest.

Die Konzentration an Calciumcarbonat in der Keimbildungsphase wird durch das Verhältnis von eingeleitetem CO₂-Volumenstrom zum Calciumhydroxidvolumenstrom gesteuert, indem in der Keimbildungsphase
a) der Calciumhydroxidvolumenstrom bei konstantem Reaktorvolumen und konstantem CO₂-Volumenstrom
   oder
b) bei konstantem Calciumhydroxidvolumenstrom und konstantem Reaktorvolumen der CO₂-Volumenstrom variiert wird.

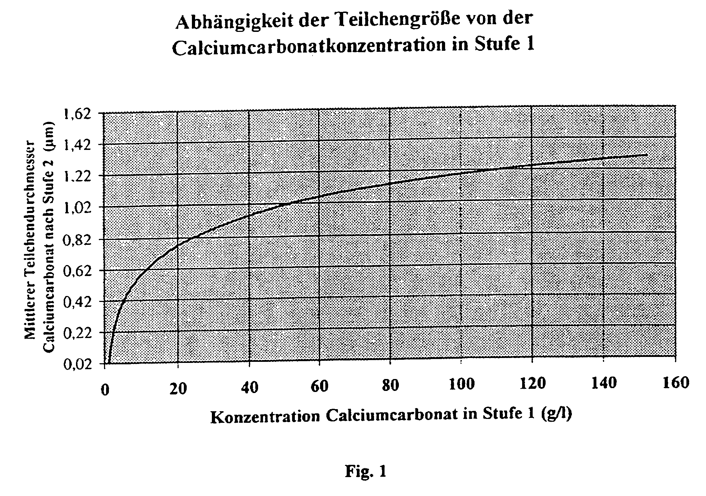

Figur 1 soll den Zusammenhang zwischen Calciumcarbonatkonzentration in Stufe 1 und resultierendem Teilchendurchmesser nach Stufe 2 zeigen. Die gezeigte Abhängigkeit gilt so nur im Zusammenhang mit weiteren Reaktionsparametern. Durch Variation dieser Parameter kann der Kurvenverlauf auch verschoben werden.

Die zweite Stufe des Verfahrens erfolgt in einem separaten Reaktor oder in seriell geschalteten Reaktoren, wobei die in der ersten Stufe gebildeten Teilchen wachsen.

Die Ausführung der Stufe 2 kann direkt im Anschluß an Stufe 1 durchgeführt werden, indem die in Stufe 1 hergestellte Suspension kontinuierlich in den ersten Reaktor der Stufe 2 eingeleitet wird. Es ist ebenfalls möglich, die in Stufe 1 hergestellte Suspension zwischenzulagern oder zu transportieren und zu einem späteren Zeitpunkt kontinuierlich fertig zu carbonisieren.

Zur Ausführung der Stufe 2 wird die Einleitung von CO₂ enthaltendem Gas in die Reaktionssuspension fortgesetzt. Die Verweilzeit in Stufe 2 muß so gewählt werden, daß unter den gegebenen Reaktionsbedingungen ein vollständiger Umsatz gewährleistet ist.

Überraschenderweise wurde gefunden, daß im Gegensatz zu dem bisher bekannten Verfahren zur Herstellung von gefälltem Calciumcarbonat, die Teilchengröße der Calciumcarbonatpartikel schon in der Stufe der Keimbildung festgelegt wird.

Die Partikelgröße wird üblicherweise in Anlehnung an die Methode Blaine ermittelt, indem der Luftwiderstand einer aus dem Calciumcarbonat gepreßten Tablette bestimmt und daraus der mittlere Teilchendurchmesser errechnet wird. Weitere übliche Möglichkeiten zur Bestimmung dieses Teilchendurchmessers sind die Elektronenmikroskopie oder die BET-Methode.

In einer bevorzugten Ausführungsform wird die Partikelgröße durch die Laserlichtstreuung bestimmt. Diese Methode kann direkt an der die Stufe 2 verlassenden Suspension durchgeführt werden. Die Methode kann online eingesetzt werden und zur Regelung des Prozesses benutzt werden, indem das Verhältnis von CO₂- und Calciumhydroxid-Volumenstrom entsprechend geregelt wird. Die Kombination der kontinuierlichen Herstellung von Calciumcarbonat mit dieser Analysenmethode führt zu einer bislang kaum erreichten Konstanz der Qualität in bezug auf den Teilchendurchmesser.

Die Partikel liegen im allgemeinen in agglomerierter Form vor, wobei die Neigung zur Agglomeration mit steigendem Teilchendurchmesser abnimmt. So findet man mittlere Agglomeratdurchmesser von 1,7 µm für Teilchengrößen von 0,2 µm.

Je nach eingestellten Reaktionsparametern kann die Modifikation rein calcitisches, rein aragonitisches oder eine Mischung aus beiden sein. Bei den überwiegend calcitischen Produkten können sowohl rhomboedrische als auch skalenoedrische Kristalle gefällt werden. Bei den aragonitischen Produkten kann der Formfaktor (Verhältnis Länge zu Durchmesser) in einem weiten Bereich variiert werden.

Es wurde weiterhin gefunden, daß in einer Ausführungsform des Verfahrens Calciumcarbonat mit Aragonitstruktur gebildet wird, wenn in Stufe 1 eine hohe Übersättigung in bezug auf Calciumcarbonat erzielt werden kann. Dies setzt eine feinteilige Kalkmilch und eine Dosierung ausreichend großer Mengen CO₂ voraus. Es kann Calciumcarbonat mit steuerbarem Aragonitgehalt von 0 bis >90 % Aragonit hergestellt werden.

Die nachfolgenden Beispiele sollen die Erfindung erläutern jedoch nicht einschränken.

### Beispiel 1:

Herstellung von feinem gefälltem Calciumcarbonat (CCP) mit aragonitische Struktur für die Anwendung in Zahnpasten

| | |
|---|---|
| Ca(OH)₂-Konzentration | 150 g/l |
| Ca(OH)₂ mittlerer Teilchendurchmesser | 1,2 µm |
| | |
| CO₂-Konzentration | 20 Vol.-% |
| Kalkmilchfluß | 5 l/h |

### Stufe 1

Rührkessel mit Propellerrührer,
Drehzahl 800 U/min, Volumen 1,7 l,
Gaseintrag durch Bodenventil

| | |
|---|---|
| Temperatur | 35 °C |
| Verweilzeit der Kalkmilch in Stufe 1 | 20 min. |
| CO₂-Fluß | 150 l/h |

### Stufe 2

Rührkessel mit Propellerrührer,
Drehzahl 800 U/min., Volumen 10 l,
Gaseintrag durch Bodenventil

| | |
|---|---|
| Temperatur | nicht geregelt |
| Verweilzeit der Kalkmilch in Stufe 2 | 2 h |
| CO₂-Fluß | 600 l/h |

| Charakterisierung des Endproduktes | |
|---|---|
| mittlerer Teilchendurchmesser | 0,22 µm |
| Modifikation | 98 % Aragonit |
| Agglomeratdurchmesser | 1,17 µm |
| Form Faktor | 15 |

### Beispiel 2:

Herstellung von feinen, überwiegend calcitischen CCP für die Anwendung im Papierstrich

| | |
|---|---|
| Ca(OH)₂-Konzentration | 150 g/l |
| Ca(OH)₂ mittlerer Teilchendurchmesser | 2,3 µm |
| | |
| CO₂-Konzentration | 12 Vol.-% |
| Kalkmilchfluß | 5 l/h |

### Stufe 1

Rührkessel mit Propellerrührer,
Drehzahl 800 U/min., Volumen 2,5 l,
Gaseintrag durch Bodenventil

| | |
|---|---|
| Temperatur | 70 °C |
| Verweilzeit der Kalkmilch in Stufe 1 | 30 min. |
| CO₂-Fluß | 600 l/h |

### Stufe 2

Rührkessel mit Propellerrührer,
Drehzahl 800 U/min., Volumen 10 l,
Gaseintrag durch Bodenventil

| | |
|---|---|
| Temperatur | nicht geregelt |
| Verweilzeit der Kalkmilch in Stufe 1 | 2 h |
| CO₂-Fluß | 600 l/h |

| Charakterisierung des Endproduktes | |
|---|---|
| mittlerer Teilchendurchmesser | 0,27 µm |
| Modifikation | 85 % -Calcit |
| Agglomeratdurchmesser | 1,21 µm |
| Morphologie | Skalenoeder |

### Beispiel 3:

Herstellung von feinen, überwiegend calcitischen CCP für die Anwendung im Papierstrich, mit Zwischenlagerung der Suspension

| | |
|---|---|
| Ca(OH)₂-Konzentration | 150 g/l |
| Ca(OH)₂ mittlerer Teilchendurchmesser | 2,3 µm |
| | |
| CO₂-Konzentration | 12 Vol.-% |
| Kalkmilchfluß | 5 l/h |

### Stufe 1

Rührkessel mit Propellerrührer,
Drehzahl 800 U/min, Volumen 2,5 l,
Gaseintrag durch Bodenventil

| | |
|---|---|
| Temperatur | 70 °C |
| Verweilzeit der Kalkmilch in Stufe 1 | 30 min. |
| CO₂-Fluß | 600 l/h |

100 l der Suspension aus Stufe 1 wurde 1 Woche bei Raumtemperatur gelagert und anschließend kontinuierlich in Stufe 2 eingeleitet, wobei die Charakterisierung des Endproduktes nach Einstellung des Reaktionsgleichgewichtes nach ca. 15 Stunden erfolgte.

### Stufe 2

Rührkessel mit Propellerrührer,
Drehzahl 800 U/min., Volumen 10 l,
Gaseintrag durch Bodenventil

| | |
|---|---|
| Temperatur | 25 °C |
| Verweilzeit der Kalkmilch in Stufe 1 | 2 h |
| CO₂-Fluß | 600 l/h |

| Charakterisierung des Endproduktes | |
|---|---|
| mittlerer Teilchendurchmesser | 0,28 µm |
| Modifikation | 85 % Calcit |
| Agglomeratdurchmesser | 1,19 µm |
| Morphologie | Skalenoeder |

### Beispiel 4:

Herstellung von ultrafeinen, überwiegend calcitischen CCP für die Anwendung als rheologisches Additiv in Plastisolen

| | |
|---|---|
| Ca(OH)₂-Konzentration | 150 g/l |
| Ca(OH)₂ mittlerer Teilchendurchmesser | 1,2 µm |
| | |
| CO₂-Konzentration | 40 Vol.-% |
| Kalkmilchfluß | 200 l/h |

### Stufe 1

Supraton, Volumen 125 ml, Drehzahl 6.500 U/min.

| | |
|---|---|
| Temperatur | 30 °C |
| Verweilzeit der Kalkmilch in Stufe 1 | ca. 1 sec |
| CO₂-Fluß | 20 m 3/h |

### Stufe 2

Rührkessel mit 6-Blatt-Rührer,
Drehzahl 750 U/min., Volumen 500 l,
Gaseintrag durch 3 Ventile in Rührernähe

| | |
|---|---|
| Temperatur | nicht geregelt |
| Verweilzeit der Kalkmilch in Stufe 1 | 2,5 h |
| CO₂-Fluß | 25.000 l/h 25.000 |

| Charakterisierung des Endproduktes | |
|---|---|
| mittlerer Teilchendurchmesser | 0,04 µm |
| Modifikation | 98 % Calcit |
| Agglomeratdurchmesser | 1,72 µm |
| Morphologie | Rhomboeder |

### Beispiel 5:

Herstellung einer feinen, überwiegend calcitischen CCP für die Anwendung als Füllstoff in der Papiermasse

| | |
|---|---|
| Ca(OH)₂-Konzentration | 150 g/l |
| Ca(OH)₂ mittlerer Teilchendurchmesser | 2,3 µm |
| | |
| CO₂-Konzentration | 12 Vol.-% |
| Kalkmilchfluß | 10 l/h |

### Stufe 1

Rührkessel mit Propellerrührer,
Drehzahl 800 U/min., Volumen 10 l,
Gaseintrag durch Bodenventil

| | |
|---|---|
| Temperatur | 70 °C |
| Verweilzeit der Kalkmilch in Stufe 1 | 60 min. |
| CO₂-Fluß | 900 l/h |

### Stufe 2

Rührkessel mit Propellerrührer,
Drehzahl 800 U/min., Volumen 10 l,
Gaseintrag durch Bodenventil

| | |
|---|---|
| Temperatur | nicht geregelt |
| Verweilzeit der Kalkmilch in Stufe 1 | 60 min. |
| CO₂-Fluß | 900 l/h |

| Charakterisierung des Endproduktes | |
|---|---|
| mittlerer Teilchendurchmesser | 1,2 µm |
| Modifikation | 75 % Calcit |
| Agglomeratdurchmesser | 1,3 µm |
| Morphologie | überwiegend |
| | Skalenoeder |

## Patentansprüche

1. Verfahren zur kontinuierlichen Herstellung von gefälltem Calciumcarbonat mit steuerbarer Teilchengröße, durch Umsetzung von Calciumhydroxid mit CO₂, in einer separaten Keimbildungsphase, in der überwiegend Caiciumcarbonatkeime gebildet werden und eine von der Keimbildung getrennte Kristallwachstumsphase, in der überwiegend die in der Keimbildungsphase gebildeten Keime entsprechend dem Calciumhydroxid- und dem CO₂-Angebot wachsen,
**dadurch gekennzeichnet, daß** die Teilchengröße des gefällten Calciumcarbonats durch die Konzentration des gebildeten Calciumcarbonats in der Keimbildungsphase gesteuert wird, indem das Verhältnis von eingeleitetem CO₂-Volumenstrom zum Calciumhydroxidvolumenstrom
a) durch den Calciumhydroxidvolumenstrom bei konstantem Reaktorvolumen und konstantem CO₂-Volumenstrom oder
b) bei konstantem Calciumhydroxidvolumenstrom und konstantem Reaktorvolumen der CO₂-Volumenstrom
variiert wird.

2. Verfahren zur kontinuierlichen Herstellung von gefälltem Calciumcarbonat nach Anspruch 1, **dadurch gekennzeichnet, daß** die Verweilzeit der Calciumhydroxidsuspension in der Keimbildungsphase 0,1 Sekunden bis 3 Stunden und die eingeleitete CO₂-Menge 1 bis 60 Mol.-%, vorzugsweise 5 bis 50 Mol.-%, bezogen auf das Calciumhydroxid, beträgt.

3. Verfahren zur kontinuierlichen Herstellung von gefälltem Calciumcarbonat nach Anspruch 1 bis 2, **dadurch gekennzeichnet, daß** die CO₂ enthaltende Gasmenge in der Keimbildungsphase 0,5 bis 250 l CO₂ pro l Calciumhydroxidsuspension beträgt.

4. Verfahren zur kontinuierlichen Herstellung von gefälltem Calciumcarbonat nach Anspruch 1 bis 3, **dadurch gekennzeichnet, daß** die Kristallwachstumsphase bei einer Verweilzeit von 0,25 bis 10 Stunden, vorzugsweise 1 bis 3 Stunden und einer CO₂ enthaltenden Gasmenge von mindestens 40 bis 99 Mol.-%, vorzugsweise 50 bis 95 Mol.-%, bezogen auf die Calciumhydroxidmenge, stattfindet.

5. Verfahren zur kontinuierlichen Herstellung von gefälltem Calciumcarbonat nach Anspruch 1 bis 4, **dadurch gekennzeichnet, daß** die Teilchengröße exakt gesteuert wird, indem diese durch Laserlichtstreuung online gemessen wird und das Verhältnis von CO₂- und Calciumhydroxid-Volumenstrom entsprechend geregelt wird.

## Claims

1. A process for the continuous production of precipitated calcium carbonate having a controllable particle size, by reacting calcium hydroxide with CO₂, in a separate nucleation phase, in which predominantly calcium carbonate nuclei are formed, and a crystal growth phase separate from the nucleation, in which predominantly the nuclei formed in the nucleation phase grow corresponding to the calcium hydroxide and the CO₂ availability,
**characterised in that** the particle size of the precipitated calcium carbonate is controlled by the concentration of the resulting calcium carbonate in the nucleation phase, by varying the ratio of the volume flow of CO₂ introduced to the volume flow of calcium hydroxide
a) by the calcium hydroxide volume flow for a constant reactor volume and constant CO₂ volume flow, or
b) the CO₂ volume flow for a constant calcium hydroxide volume flow and constant reactor volume.

2. A process for the continuous production of precipitated calcium carbonate according to Claim 1, **characterised in that** the dwell time of the calcium hydroxide suspension in the nucleation phase is 0.1 seconds to 3 hours, and the quantity of CO₂ introduced is 1 to 60 mole percent, preferably 5 to 50 mole percent, relative to the calcium hydroxide.

3. A process for the continuous production of precipitated calcium carbonate according to Claims 1 to 2, **characterised in that** the quantity of CO₂-containing gas in the nucleation phase is 0.5 to 250 I CO₂ per litre of calcium hydroxide suspension.

4. A process for the continuous production of precipitated calcium carbonate according to Claims 1 to 3, **characterised in that** the crystal growth phase takes place at a dwell time of 0.25 to 10 hours, preferably 1 to 3 hours, and a quantity of CO₂-containing gas of at least 40 to 99 mole percent, preferably 50 to 95 mole percent, relative to the quantity of calcium hydroxide.

5. A process for the continuous production of precipitated calcium carbonate according to Claims 1 to 4, **characterised in that** the particle size is controlled exactly by being measured online by laser light scattering and the ratio of the volume flows of CO₂ and calcium hydroxide being regulated accordingly.

## Revendications

1. Procédé de production en continu de carbonate de calcium précipité présentant une taille de particules réglable, par réaction d'hydroxyde de calcium avec CO₂, lors d'une phase de germination séparée, dans laquelle des germes de carbonate de calcium sont essentiellement formés, et d'une phase de croissance cristalline séparée de la germination, dans laquelle essentiellement les germes formés pendant la phase de germination croissent en fonction de l'apport d'hydroxyde de calcium et de CO₂, **caractérisé en ce que** la taille de particules du carbonate de calcium précipité est commandée par la concentration du carbonate de calcium formé lors de la phase de germination, **en ce que** le rapport entre volume de CO₂ introduit et volume d'hydroxyde de calcium varie
a) par l'écoulement volumétrique de l'hydroxyde de calcium, pour un volume de réacteur constant et un écoulement volumétrique de CO₂ constant,
ou
b) par l'écoulement volumétrique de CO₂ pour un écoulement volumétrique d'hydroxyde de calcium constant et un volume de réacteur constant.

2. Procédé de production en continu de carbonate de calcium précipité selon la revendication 1, **caractérisé en ce que** le temps de séjour de la suspension d'hydroxyde de calcium lors de la phase de germination est compris entre 0,1 seconde et 3 heures, et **en ce que** la quantité de CO₂ introduite est comprise entre 1 et 60 % en mole, de préférence entre 5 et 50 % en mole, sur la base de l'hydroxyde de calcium.

3. Procédé de production en continu de carbonate de calcium précipité selon la revendication 1 ou 2, **caractérisé en ce que** la quantité de gaz contenant CO₂ lors de la phase de germination est comprise entre 0,5 et 250 l CO₂ par l de suspension d'hydroxyde de calcium.

4. Procédé de production en continu de carbonate de calcium précipité selon la revendication 1 à 3, **caractérisé en ce que** la phase de croissance cristalline se produit sur un temps de séjour de 0,25 à 10 heures, de préférence de 1 à 3 heures, et pour une quantité de gaz contenant CO₂ d'au moins 40 à 99 % en mole, de préférence comprise entre 50 et 95 % en mole, sur la base de la quantité d'hydroxyde de calcium.

5. Procédé de production en continu de carbonate de calcium précipité selon la revendication 1 à 4, **caractérisé en ce que** la taille des particules est commandée de façon exacte **en ce que** celle-ci est mesurée en ligne par diffusion de lumière laser et que le rapport entre écoulement volumétrique de CO₂ et écoulement volumétrique d'hydroxyde de calcium est ajusté en conséquence.
